# EUROPEAN PATENT SPECIFICATION

(11) **EP 3 637 980 B1**
(45) Date of publication and mention of the grant of the patent: **30.06.2021**
(21) Application number: 18725918.9
(22) Date of filing: 30.04.2018
(51) Int. Cl.: A01D 75/20, B60J 5/04, B62D 25/10

(54) **A PANEL FOR AN AGRICULTURAL VEHICLE AND AN AGRICULTURAL VEHICLE HAVING SUCH A PANEL**
PLATTE FÜR EIN LANDWIRTSCHAFTLICHES FAHRZEUG UND LANDWIRTSCHAFTLICHES FAHRZEUG MIT EINER SOLCHEN PLATTE
PANNEAU POUR VÉHICULE AGRICOLE ET VÉHICULE AGRICOLE COMPORTANT UN TEL PANNEAU

(30) Priority: 14.06.2017 US 201762519240 P
(43) Date of publication of application: 22.04.2020
(73) Proprietor: AGCO Corporation, Duluth, GA 30096 (US)
(72) Inventor: UNRAU, Jared, Hesston, Kansas 67062-0969 (US); ROGERS, James, Hesston, Kansas 67062-0969 (US); LINDEN, Ethan, Hesston, Kansas 67062-0969 (US)
(74) Representative: AGCO Intellectual Property Department
(86) International application number: PCT/IB2018/052974
(87) International publication number: WO 2018/229564

(56) References cited:
- WO-A1-2015/009142
- GB-A- 1 194 579
- US-A- 5 135 080
- US-A1- 2002 096 906
- US-A1- 2016 222 691

## Description

### Field of the Invention

The present invention relates to a panel for an agricultural vehicle, preferably an agricultural harvester such as a combine harvester, and an agricultural vehicle having such a panel.

### Background of the Invention

On many agricultural vehicles such as combine harvesters, internal vehicle components are often covered by external panels which are removable or hinged to provide direct access to the contained components. Such a vehicle can be seen for example in WO 2015/009142 A1.

However, due to functional components requiring more space constraints, providing a robust latch mechanism that seals the processor sufficiently and is ergonomically friendly for the user is a challenge. In addition, for vehicles of increased size, such access panels may similarly increase in size which can result in the user having to open or remove relatively bulky and heavy access panels.

As a result, it is an object of the invention to provide a panel system for an agricultural vehicle which addresses the above concerns.

A panel system is disclosed in United States patent application US 2016/022691 A1 for a vehicle having a structural frame supporting vehicle components within the interior of the vehicle. The vehicle has a panel provided on the frame, the panel at least partially covering a portion of the vehicle interior, and the panel comprising a substantially rigid sub-frame, and a flexible sheet material supported by said sub-frame

### Summary of the Invention

In accordance with the present invention, there is provided an agricultural vehicle as claimed in claim 1 of the attached claims.

Providing a covering panel formed with a flexible sheet material provides a relatively lightweight system for the protection of internal vehicle components.

It will be understood that the flexible sheet material is formed from a different material than the rigid sub-frame. The rigid sub-frame may be formed from a structurally rigid durable material such as a metal, e.g. steel or aluminium, or a hard plastics material, e.g. HDPE, PVC.

Preferably, the flexible sheet material is formed of rubber, a canvas material, vinyl material, a tarpaulin, or a durable plastics material, e.g. LDPE, acrylics.

As an operator can access the vehicle interior via the closure mechanism provided with the flexible sheet of the panel, accordingly the inner components of the vehicle can be relatively easily accessed without requiring movement of an entire structural panel. The portion of the flexible sheet material can be simply folded away or rolled up to provide access through the panel to the vehicle interior.

Preferably, the panel comprises at least one retention element to retain the removed portion of the flexible sheet material in a folded away or rolled up state.

Preferably, the retention element comprises at least one of: a strap fastener, a button fastener, a clamp.

Preferably, the at least one retention element is provided at an upper end of the panel.

Alternatively, the sheet material may be configured to loosely hang in a downwards direction after opening of the closure mechanism.

Preferably, the closure mechanism is used to at least partially attach the flexible sheet material to the sub-frame.

Preferably, the closure mechanism provides a seal between at least a portion of the flexible sheet material and the sub-frame.

Preferably, the closure mechanism comprises at least one of the following: a zip fastener, an array of snap-fit fasteners, hook-and-loop fasteners (e.g. a Velcro fastener), button fasteners, a draw-string fastener, a clamping system.

The use of such a simple closure mechanism allows for easy opening and closing of the flexible sheet material.

In a further aspect, the panel comprises a sealable access flap provided as part of the flexible sheet material.

Providing an access flap in the sheet material results in a simpler way for an operator to access the vehicle interior, without removing the entire area of sheet material. It will be understood that the access flap is preferably formed from a flexible sheet material as described above. In addition, it will be understood that the access flap may be secured to the remainder of the sheet material using a closure mechanism as described above.

In a further aspect, a portion of said flexible sheet material comprises a substantially transparent material.

With the addition of a transparent portion to the flexible sheet material, an operator can easily see into the interior of the vehicle without removing the sheet material or the panel itself. Such a configuration can allow for easy inspection of components and identification of faults within the interior of the vehicle.

Preferably, the sub-frame comprises coupling elements to attach the panel to the vehicle frame.

The sub-frame may be hingedly attached to the vehicle frame.

The panel may be provided as an aftermarket part, for installation on or retrofitting to an existing agricultural vehicle.

### Detailed Description of the Invention

Embodiments of the invention will now be described, by way of example only, with reference to the accompanying drawings, in which:
Fig. 1 is an overview of an agricultural vehicle according to the invention in the form of a combine harvester;
Fig. 2 is an illustration of a first embodiment of panel according to the invention for use on the combine harvester of Fig. 1;
Fig. 3 is an illustration of a panel of Fig. 2 having a rolled-up flexible sheet;
Fig. 4 is an illustration of a second embodiment of panel according to the invention;
Fig. 5 is an illustration of a third embodiment of panel according to the invention; and
Fig. 6 is an illustration of a fourth embodiment of panel according to the invention.

The drawings are provided by way of reference only, and will be acknowledged as not to scale.

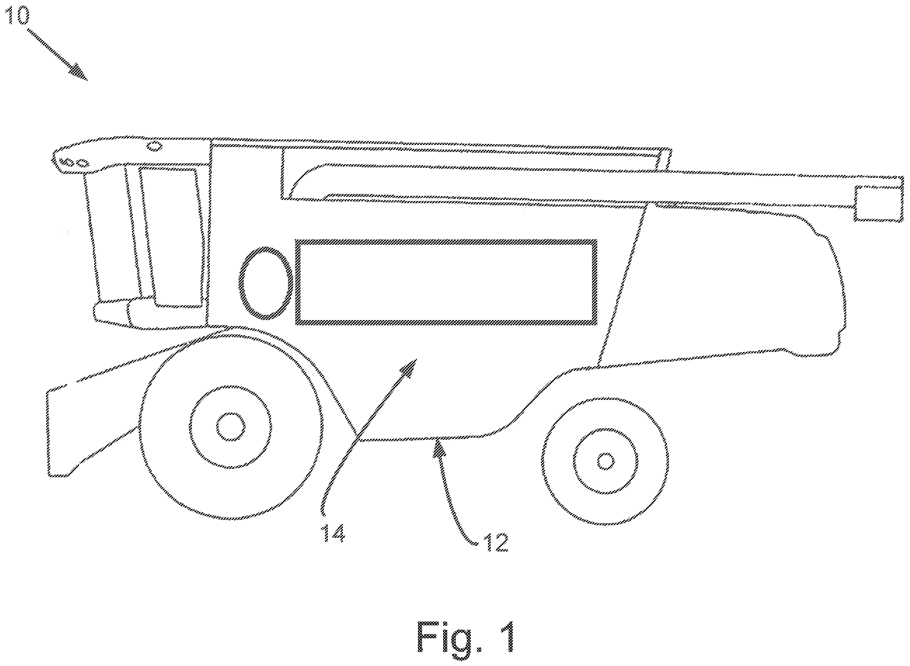

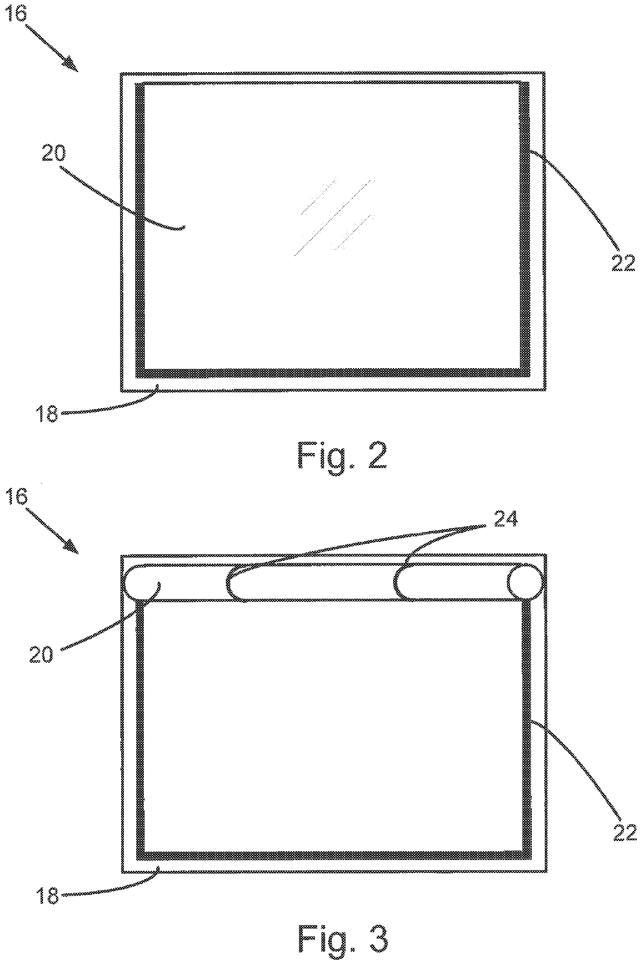

An agricultural vehicle in the form of a combine harvester is indicated at 10 in Fig. 1. The combine 10 comprises a structural frame or chassis indicated generally at 12, which is used to support a variety of internal components, such as grain processors, threshing cylinders and concaves, etc., which are generally indicated at 14. In order to at least partially cover and protect such internal components 14 during operation of the combine 10, suitable panels are mounted to the frame 12. It will be understood that such panels are generally may be provided as part of the structural frame of the combine 10, positioned behind or underneath an external fascia, but it will be understood that the panels may be used at any point on the vehicle where it is desired to protect internal vehicle components. The panels may be attached to the frame 12 in a semi-permanent manner, e.g. bolted, welded, or hinged. Embodiments of such panels according to the invention are shown in Figs. 2-5.

With reference to Fig. 2, a first embodiment of panel is indicated at 16. The panel 16 comprises a substantially rigid rectangular sub-frame 18. The sub-frame 18 is provided as a structurally rigid durable material such as a metal, e.g. steel or aluminium, or a hard plastics material, e.g. HDPE, PVC. The sub-frame 18 may be provided as a tubular construction.

Within the confines of the sub-frame 18, the panel 16 comprises a flexible sheet material 20 supported by the sub-frame 18. The flexible sheet material 20 is formed of a relatively light-weight material which is relatively flexible or pliable, e.g. rubber, a canvas material, vinyl material, a tarpaulin, or a durable light-weight plastics material, e.g. LDPE, acrylics. It can be seen that the majority of the surface area of the panel 16 is provided by the flexible sheet material 20, resulting in a relatively light-weight panel for use on the combine harvester 10.

The panel 16 further comprises a closure mechanism 22 which couples a portion of the flexible sheet material 20 with the sub-frame 18. In the embodiment shown in Fig. 2, the closure mechanism 22 is arranged along three out of four sides of the flexible sheet 20, serving to attach the flexible sheet 20 with the sub-frame 18 along those sides. Along the fourth side, the flexible sheet 20 may be permanently attached to the sub-frame 18, e.g. using adhesive or welding.

The closure mechanism 22 is provided as a releasable connection between the flexible sheet 20 and the sub-frame 18, such that an operator can relatively easily "open" the connection between the flexible sheet 20 and the sub-frame 18 as required. By "opening" the closure mechanism 22, an operator is provided with access to the interior of the combine harvester 10 which is covered by the panel 16, e.g. for an inspection or service operation.

The closure mechanism 22 can be provided as any suitable system for attaching a sheet with a sub-frame, e.g. a zip fastener, an array of snap-fit fasteners, hook-and-loop fasteners (e.g. a Velcro fastener), button fasteners, a draw-string fastener, a clamping system.

By providing the closure member 22 along three out of four sides of the flexible sheet 20, accordingly the flexible sheet 20 may be relatively easily rolled up or folded away for the duration of a service operation. With reference to Fig. 3, the panel 16 is provided with retention elements in the form of straps 24 which can be used to retain the flexible sheet 20 in a rolled-up state. It will be understood that other types of retention elements may be used, e.g. button fasteners, zipped fasteners, or clamps. The retention elements 24 are preferably provided along the top side of the panel 16, such that releasing of the retention elements 24 allows the flexible sheet 20 to fall into place with the sub-frame 18 under the effect of gravity, but it will be understood that the location of such elements may be varied depending on the ease of access for an operator.

While the embodiment of Figs. 2 and 3 shows the closure mechanism 22 arranged along three out of four sides of the flexible sheet 20, it will be understood that other configurations of the closure mechanism 22 may be provided. For example, the closure mechanism 22 may be provided around the entire periphery of the flexible sheet 20, such that the flexible sheet 20 is solely secured to the sub-frame 18 using the closure mechanism 22. Such a configuration may allow for the flexible sheet 20 to be easily replaced in the event of damage, without requiring replacement of the entire panel 16.

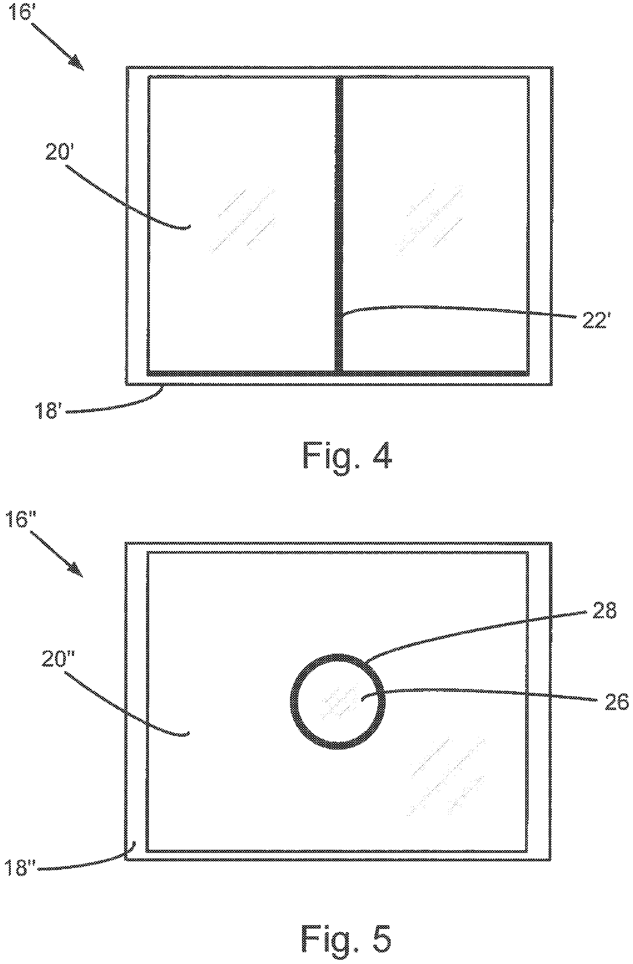

A further embodiment of panel is indicated at 16' in Fig. 4, with elements common to the first embodiment indicated with the addition of a single dash to the reference numerals. In this embodiment, the closure mechanism 22' is provided along a lower side of the flexible sheet 20', and also extends at least partly into the interior area of the flexible sheet 20. In this instance, the opening of the closure mechanism 22' by an operator allows the flexible sheet to be parted like a curtain, to allow access to the interior of the combine harvester 10.

A further embodiment of panel is indicated at 16" in Fig. 5, with elements common to the first embodiment indicated with the addition of a double dash to the reference numerals. In this embodiment, the flexible sheet 20" is arranged as fixed to the surrounding sub-frame 18", with the addition of a sealable access flap 26 provided within the flexible sheet 20". The access flap 26 is similarly provided as a flexible sheet material as described above. In addition, the access flap 26 is attached to the flexible sheet 20" via a closure mechanism 28 similar to that as described above, wherein an operator can chose to at least partly remove the access flap 26 to provide access to a small area of the vehicle interior, without requiring the removal of the entire flexible sheet 20".

In a further aspect of the invention, it will be understood that at least a portion of the flexible sheet material 20,20',20" may be provided as a substantially transparent material. In the embodiment of Fig. 5, the access flap 26 is provided as a transparent material, so that an operator can relatively easily see into the interior of the vehicle, without first removing the sheet material 20,20',20" or the panel itself. It will be understood that the embodiments of Figs. 2-4 may be similarly provided with transparent sections as part of the flexible sheet material 20,20'. Such a configuration can allow for easy inspection of components and identification of faults within the interior of the vehicle.

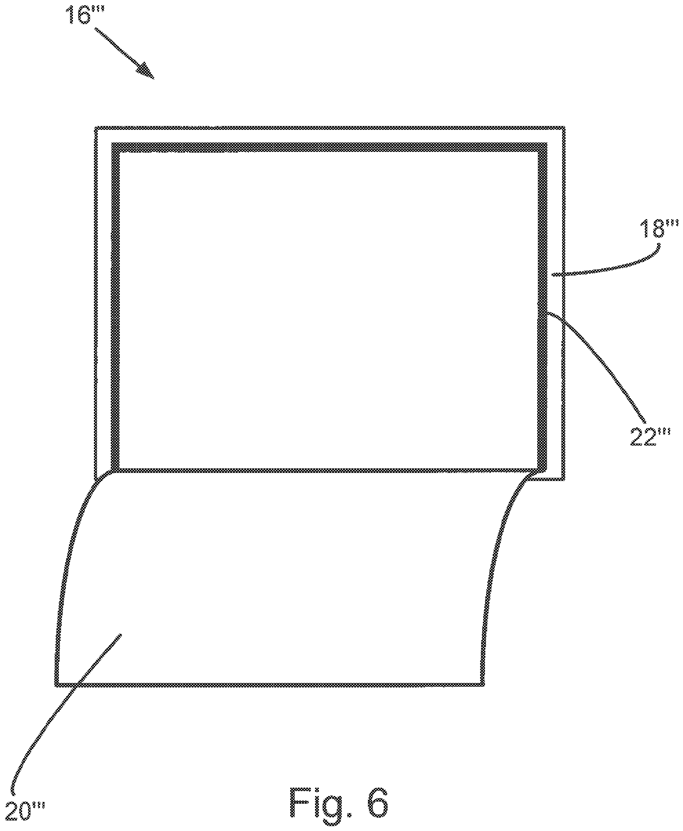

A further embodiment of the invention is illustrated in Fig. 6, similar to the embodiment of Figs. 2 & 3, with elements common to the first embodiment indicated with the addition of a treble dash to the reference numerals. In this embodiment, the closure mechanism 22'" is arranged about the top and left and right sides of the panel 16''', such that when the closure mechanism 22'" is opened by an operator, the sheet material 20''' can be allowed to loosely hang from the sub-frame 18''' along the bottom portion of the sub-frame 18'''. Such a construction ensures that the sheet material 20''' easily remains out of the way, while an operator accesses the interior of the vehicle through the opened panel 16'''.

It will be understood that the features of the above-described embodiments may be combined as required, for example, the different closure mechanisms 22,22',22''' may be combined with the use of a separate access flap 26, to provide an operator with a variety of different access options.

While the illustrated embodiments show panels having a generally rectangular shape, it will be understood that the shape of the panels may vary, and may be adapted to the dimensions and shape requirements of the vehicle to which they are mounted. In addition, while the invention is described in the context of the preferred embodiment of a combine harvester, it will be understood that the invention may equally apply for other agricultural vehicles, e.g. a forage harvester, an agricultural tractor.

The use of such panels as described above provides several advantages over the prior art. Firstly, through use of appropriate closure mechanisms, tools are no longer required to remove vehicle access panels. In addition, the panels can remain attached to the vehicle during servicing, but can be rolled or folded out of the way. This avoids the risks associated with removable parts out in the field. Also, the use of flexible sheet material for the majority of the panel can result in a relatively light-weight panel which can be relatively easily constructed and assembled, and without the need for additional manufacturing and space requirements present in the use of prior art latched access panels.

## Claims

1. An agricultural vehicle (10) having a structural frame (12) supporting vehicle components (14) within the interior of the vehicle, the vehicle further comprising at least one panel (16) provided on the frame (12), the panel (16) at least partially covering a portion of the vehicle interior, the panel comprising:
a substantially rigid sub-frame (18), and
a flexible sheet material (20) supported by said sub-frame (18);
wherein the panel (16) comprises a closure mechanism (22) coupled with at least a portion of the flexible sheet material (20), such that an operator can open the closure mechanism (22) to at least partly remove a portion of the flexible sheet material, to provide access to an interior of the vehicle covered by the panel (16), **characterised in that** the agricultural vehicle (10) is a combine harvester, and **in that** the panel (16) covers at least a portion of a processor system (14) of the harvester.

2. The agricultural vehicle of claim 1, wherein the flexible sheet material (20) is formed from a different material than the rigid sub-frame (18).

3. The agricultural vehicle of claim 1 or claim 2, wherein the rigid sub-frame (18) is formed from a structurally rigid durable material such as a metal, e.g. steel or aluminium, or a hard plastics material, e.g. HDPE, PVC.

4. The agricultural vehicle of any one of claims 1-3, wherein the flexible sheet material (20) is formed of rubber, a canvas material, vinyl material, a tarpaulin, or a durable plastics material, e.g. LDPE, acrylics.

5. The agricultural vehicle of claim 1, wherein the closure mechanism (22) is used to at least partially attach the flexible sheet material (20) to the sub-frame (18).

6. The agricultural vehicle of claim 1 or claim 5, wherein the closure mechanism (22) comprises at least one of the following: a zip fastener, an array of snap-fit fasteners, hook-and-loop fasteners (e.g. a Velcro fastener), button fasteners, a draw-string fastener, a clamping system.

7. The agricultural vehicle of any one of claims 1, 5 or 6, wherein the panel (16) comprises at least one retention element (24) to retain the removed portion of the flexible sheet material (20) in a folded away or rolled up state, the retention element (24) preferably comprising at least one of: a strap fastener, a button fastener, a clamp.

8. The agricultural vehicle of claim 7, wherein the at least one retention element (24) is provided at an upper end of the panel (16).

9. The agricultural vehicle of any one of claims 1-8, wherein the panel (16) comprises a sealable access flap (26) provided as part of the flexible sheet material (20).

10. The agricultural vehicle of any one of claims 1-9, wherein a portion of the flexible sheet material (20) comprises a substantially transparent material.

11. The agricultural vehicle of any one of claims 1-10, wherein the sub-frame (18) comprises coupling elements to attach the panel (16) to the vehicle frame (14).

## Patentansprüche

1. Landwirtschaftliches Fahrzeug (10) einem Tragrahmen (12), der im Innenraum des Fahrzeugs enthaltene Fahrzeugkomponenten (14) lagert, wobei das Fahrzeug weiterhin mindestens eine an dem Rahmen (12) vorgesehene Platte (16) aufweist, wobei die Platte (16) zumindest teilweise einen Teil des Fahrzeuginnenraums abdeckt, wobei die Platte Folgendes aufweist:
- einen im Wesentlichen steifen Teilrahmen (18), und
- ein nachgiebiges Plattenmaterial (20), das durch den Teilrahmen (18) gestützt ist;
wobei die Platte (16) einen zumindest mit einem Teil des nachgiebigen Plattenmaterials (20) verbundenen Schließmechanismus (22) aufweist, sodass ein Bediener den Schließmechanismus (22) öffnen kann, um zumindest teilweise einen Teil des nachgiebigen Plattenmaterials zu entfernen, um einen Zugang zu einem von der Platte (16) abgedeckten Innenraum des Fahrzeugs bereitzustellen, **dadurch gekennzeichnet, dass**
das landwirtschaftliche Fahrzeug (10) ein Mähdrescher ist und die Platte (16) zumindest einen Teil eines Verarbeitungssystems (14) des Mähdreschers abdeckt.

2. Landwirtschaftliches Fahrzeug nach Anspruch 1, wobei das nachgiebige Plattenmaterial (20) aus einem anderen Material als der steife Teilrahmen (18) besteht.

3. Landwirtschaftliches Fahrzeug nach Anspruch 1 oder 2, wobei der steife Teilrahmen (18) aus einem struktursteifen, haltbaren Material wie beispielsweise Metall, z. B. Stahl oder Aluminium, oder einem harten Plastikmaterial, z. B. HDPE, PVC, besteht.

4. Landwirtschaftliches Fahrzeug nach mindestens einem der Ansprüche 1-3, wobei das nachgiebige Plattenmaterial (20) aus Gummi, einen Tuchmaterial, einem Vinylmaterial, einem Planenmaterial oder einem haltbaren Kunststoffmaterial, z. B. LDPE, Acryl, besteht.

5. Landwirtschaftliches Fahrzeug nach Anspruch 1, wobei der Schließmechanismus (22) verwendet wird, um das flexible Plattenmaterial (20) zumindest teilweise an dem Teilrahmen (18) zu befestigen.

6. Landwirtschaftliches Fahrzeug nach Anspruch 1 oder 5, wobei der Schließmechanismus (22) mindestens eines der folgenden Dinge aufweist: einen Reißverschluss, eine Anordnung von Rastverbindern, Haken-und-Ösen-Verbinder (z. B. einen Klettverschluss), Knopfverschlüsse, einen Schnürverschluss, ein Klemmsystem.

7. Landwirtschaftliches Fahrzeug nach mindestens einem der Ansprüche 1, 5 oder 6, wobei die Platte (16) mindestens ein Rückhalteelement (24) aufweist, um den entfernten Teil des nachgiebigen Plattenmaterials (20) in einem weg gefalteten oder aufgerollten Zustand zurückzuhalten, wobei das Rückhalteelement (24) vorzugsweise mindestens eines der folgenden Dinge aufweist: einen Gurtverschluss, einen Knopfverschluss, eine Klemme.

8. Landwirtschaftliches Fahrzeug nach Anspruch 7, wobei das mindestens eine Rückhalteelement (24) an einem oberen Ende der Platte (16) vorgesehen ist.

9. Landwirtschaftliches Fahrzeug nach mindestens einem der Ansprüche 1-8, wobei die Platte (16) mindestens eine abdichtbare Zugangsklappe (26) aufweist, die als Teil des nachgiebigen Plattenmaterials (20) vorgesehen ist.

10. Landwirtschaftliches Fahrzeug nach mindestens einem der Ansprüche 1-9, wobei ein Teil des nachgiebigen Plattenmaterials (20) ein im Wesentlichen durchsichtiges Material aufweist.

11. Landwirtschaftliches Fahrzeug nach mindestens einem der Ansprüche 1-10, wobei der Teilrahmen (18) Verbindungselemente zum Befestigen der Platte (16) an dem Fahrzeugrahmen (14) aufweist.

## Revendications

1. Véhicule agricole (10) présentant un châssis structurel (12) supportant des composants de véhicule (14) dans le compartiment intérieur du véhicule, le véhicule comprenant, en outre, au moins un premier panneau (16) agencé sur le châssis (12), le panneau (16) recouvrant au moins partiellement une partie de l'intérieur du véhicule, le panneau comprenant :
un châssis secondaire sensiblement rigide (18), et
un matériau en feuille flexible (20) supporté par ledit châssis secondaire (18) ;
dans lequel le panneau (16) comprend un mécanisme d'obturation (22) couplé avec au moins une partie du matériau en feuille flexible (20), de telle sorte qu'un opérateur peut ouvrir le mécanisme d'obturation (22) afin de retirer au moins partiellement une partie du matériau en feuille flexible, de manière à assurer l'accès à un compartiment intérieur du véhicule recouvert par le panneau (16), **caractérisé en ce que** le véhicule agricole (10) est une moissonneuse batteuse, et **en ce que** le panneau (16) recouvre au moins une partie du dispositif de traitement (14) de la moissonneuse.

2. Véhicule agricole selon la revendication 1, dans lequel le matériau en feuille flexible (20) est formé à partir d'un matériau différent de celui du châssis secondaire rigide (18).

3. Véhicule agricole selon la revendication 1 ou 2, dans lequel le châssis secondaire rigide (18) est formé en un matériau rigide résistant tel que du métal, par exemple, de l'acier ou de l'aluminium, ou une matière plastique dure, par exemple, de l'HDPE, du PVC.

4. Véhicule agricole selon l'une quelconque des revendications 1 à 3, dans lequel le matériau en feuille flexible (20) est formé à partir de caoutchouc, d'un matériau en toile, d'un matériau vinyle, d'une bâche ou d'une matière plastique résistante, par exemple du LDPE, des acryliques.

5. Véhicule agricole selon la revendication 1, dans lequel le mécanisme d'obturation (22) est utilisé afin de fixer au moins partiellement le matériau en feuille flexible (20) sur le châssis secondaire (18).

6. Véhicule agricole selon la revendication 1 ou 5, dans lequel le mécanisme d'obturation (22) comprend au moins l'un des suivants : une fermeture éclair, une rangée de dispositifs de fixation à encliquetage, des dispositifs de fixation à crochet et boucle (par exemple, un dispositif de fixation Velcro), des dispositifs de fixation à bouton, un dispositif de fixation par cordon, un dispositif de blocage.

7. Véhicule agricole selon l'une quelconque des revendications 1, 5 ou 6, dans lequel le panneau (16) comprend au moins un élément de rétention (24) destiné à retenir la partie retirée du matériau en feuille flexible (20) dans un état replié ou enroulé, l'élément de rétention (24) comprenant, de préférence, au moins l'un d'un dispositif de fixation par sangle, d'un dispositif de fixation à bouton, d'un dispositif de blocage.

8. Véhicule agricole selon la revendication 7, dans lequel le au moins un élément de rétention (24) est agencé au niveau d'une extrémité supérieure du panneau (16).

9. Véhicule agricole selon l'une quelconque des revendications 1 à 8, dans lequel le panneau (16) comprend un volet d'accès pouvant être scellé (26) formé comme une partie du matériau en feuille flexible (20).

10. Véhicule agricole selon l'une quelconque des revendications 1 à 9, dans lequel une partie du matériau en feuille flexible (20) comprend un matériau sensiblement transparent.

11. Véhicule agricole selon l'une quelconque des revendications 1 à 10, dans lequel le châssis secondaire (18) comprend des éléments de couplage destinés à fixer le panneau (16) sur le châssis de véhicule (14).
